# EUROPÄISCHE PATENTSCHRIFT

(11) **EP 0 430 976 B1**
(45) Veröffentlichungstag und Bekanntmachung des Hinweises auf die Patenterteilung: **19.01.1994**
(21) Anmeldenummer: 89908825.6
(22) Anmeldetag: 02.08.1989
(51) Int. Cl.: H02K 5/167, F16C 33/18

(54) **WELLENLAGERUNG, INSBESONDERE FÜR EINEN ELEKTROKLEINSTMOTOR**
SHAFT BEARING, IN PARTICULAR FOR A MINIATURE ELECTRIC MOTOR
COUSSINET D'ARBRE, NOTAMMENT POUR MOTEUR ELECTRIQUE MINIATURE

(30) Priorität: 25.08.1988 DE 3828874
(43) Veröffentlichungstag der Anmeldung: 12.06.1991
(73) Patentinhaber: INTERELECTRIC AG, CH-6072 Sachseln (CH)
(72) Erfinder: FÜTTERER, Bodo, CH-6005 Luzern (CH)
(74) Vertreter: Grünecker, Kinkeldey, Stockmair & Schwanhäusser Anwaltssozietät
(86) Internationale Anmeldenummer: EP8900910
(87) Internationale Veröffentlichungsnummer: WO9002435

(56) Entgegenhaltungen:
- FR-A- 2 137 680
- FR-A- 2 269 230
- US-A- 2 059 891
- US-A- 3 002 794
- US-A- 3 870 383

## Beschreibung

Die Erfindung bezieht sich auf eine Wellenlagerung, insbesondere für einen Elektrokleinstmotor, mit mindestens einem Lagerblock aus einem porösen, ölgetränkten Material, in dem eine die Welle aufnehmende Lagerbohrung ausgebildet ist und der eine Axialfläche aufweist, die einem auf der Welle ausgebildeten Anlaufbund zugewandt ist.

Solche Lagerungen sind im Kleinstmotorenbau weit verbreitet. Die zumeist aus gesinterter Bronze bestehenden Lagerblöcke speichern einen kleinen Ölvorrat, der für eine hydrodynamische Lagerung der Welle in radialer Richtung ausreicht. Die axiale Fixierung der Welle erfolgt über einen auf der Welle ausgebildeten Lagerbund, beispielsweise eine dort aufgebrachte Anlaufscheibe, die sich gegenüber einer Stirnfläche des Lagerblocks abstützen kann. Zumeist sind zwei Lagerblöcke an den sich gegenüberliegenden freien Enden der Welle vorgesehen, wobei die Anlaufbünde ein gewisses axiales Spiel der Welle erlauben. Dieses Spiel, das für einen reibungsarmen Lauf der Welle notwendig ist, führt jedoch dazu, daß die Welle in axialer Richtung schwingen kann, was zu unerwünschten Geräuschentwicklungen führt; bei den axialen Schwingungen stoßen die Anlaufbünde an den Axialflächen der Lagerblöcke an. Wenn man bedenkt, daß diese Kleinstmotoren bei besonders geräuschempfindlichen Geräten, wie z. B. Hifi-Tonbandgeräten oder Videorekorder eingesetzt werden, so kommt der Verringerung der Laufgeräusche eines solchen Motors eine enorme Bedeutung zu.

Aus der US-PS 3 002 794 ist eine Lagerung für einen Elektromotor bekannt, bei der ein Sinterlager von einem ölgetränkten Filzring umgeben ist, um das Lager mit Öl zu versorgen. Eine ähnliche Konstruktion ist aus der US-PS 20 59 891 und auch der FR-A-21 37 680 bekannt.

Der Erfindung liegt die Aufgabe zugrunde, die durch Axialbewegungen der Welle in der Wellenlagerung entstehenden Geräusche zu verringern.

Diese Aufgabe wird erfindungsgemäß dadurch gelöst, daß zwischen dem Anlaufbund der Welle und der Axialfläche des Lagerblocks eine ölgetränkte Dämpfungsscheibe aus einem saugfähigen Material angeordnet ist, dessen Kapillarwirkung größer ist als die des porösen Lagerblocks.

Das saugfähige Material der Dämpfungsscheibe wirkt als Käfig für das in dem Material befindliche Öl. In dem Material der Dämpfungsscheibe wird sozusagen ein Öltropfen eingefangen und in dem Spalt zwischen der Axialfläche des Lagerblocks und dem Anlaufbund gehalten. Der dadurch stets vorhandene Öltropfen bewirkt eine Dämpfung der Axialschwingungen der Welle und damit eine enorme Verringerung der dadurch verursachten Geräuschentwicklung. Da die Kapillarwirkung des Materials der Dämpfungsscheibe größer ist als die des porösen Lagerblocks, wird verhindert, daß das Öl aus der Dämpfungsscheibe in den Lagerblock gesaugt wird. Ganz im Gegenteil verursacht die höhere Kapillarwirkung der Dämpfungsscheibe, daß Öl aus dem Lagerblock in die Dämpfungsscheibe gesaugt wird, so daß die Dämpfungsscheibe stets mit Öl gesättigt ist. Da von der Dämpfungsscheibe kein Öl abgegeben werden kann, bildet sich zwischen dem Ölhaushalt der Dämpfungsscheibe und dem Lagerblock ein Gleichgewicht aus.

Der Abstand des Lagerblocks zu dem Anlaufbund entspricht in vorteilhafter weise etwa der Dicke der ölgetränkten Dämpfungsscheibe. Die Dämpfungsscheibe kann durchaus spielbehaftet in den Spalt zwischen dem Lagerblock und dem Anlaufbund eingesetzt werden. Ein günstiges Material für die Ausbildung der Dämpfungsscheibe kann ein ölbeständiges Faservlies sein. Als besonders günstig hat es sich herausgestellt, wenn die Dämpfungsscheibe aus einem synthetischen Leder besteht. Dieses Material hat von Haus aus eine größere Kapillarwirkung als die im Einsatz befindlichen Bronzesinterlager und ist darüberhinaus hinreichend ölbeständig.

Im folgenden wird ein Ausführungsbeispiel der Erfindung anhand einer Zeichnung näher erläutert. Es zeigen:

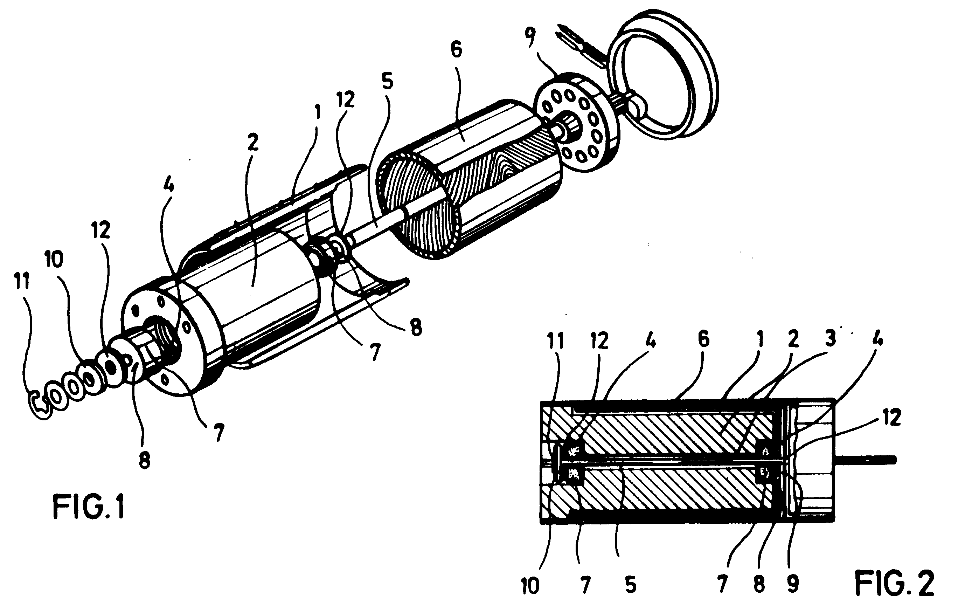

**Fig. 1** in einer perspektivischen Explosionsdarstellung einen teilweise aufgeschnittenen Elektrokleinstmotor,
**Fig. 2** einen Längsschnitt durch den Motor aus Fig. 1.

In der Zeichnung ist in vergrößerter Darstellung ein Elektrokleinstmotor gezeigt, wie er für den Antrieb in Tonbandgeräten und dergleichen verwendet wird. Der Motor umfaßt ein Außengehäuse 1, in dem ein konzentrisch angeordneter Permanentmagnet 2 als Stator befestigt ist. Der Permanentmagnet 2 ist von einer Wellenbohrung 3 durchsetzt, die an den stirnseitigen Enden des Permanentmagnetes 2 in radial abgesetzten Ausnehmungen 4 mündet. Durch die Wellenbohrung 3 erstreckt sich eine Rotorwelle 5, auf der ein topfförmiger, den Permanentmagneten übergreifender Wickelkörper 6 als Rotor drehfest aufgebracht ist.

In den Ausnehmungen 4 sind Lagerblöcke 7 aus gesinterter, poröser Bronze eingesetzt. Die Lagerblöcke 7 weisen eine der Welle 5 angepaßte Bohrung zur Radiallagerung der Welle 5 auf und mindestens eine im wesentlichen glatte Axialfläche 8. Der unmittelbar an die Welle 5 angrenzende, sich radial erstreckende Bereich des Wickelkörpers 6 ist als Anlaufbund 9 ausgebildet, und sitzt in axialer Richtung fest auf der Welle 5 auf.

An dem anderen, durch die Bohrung des Lagerblocks 7 hindurchragenden Ende der Lagerwelle 5 ist eine Anlaufscheibe 10 angebracht, die durch einen Wellensicherungsring 11 auf der Welle 5 gehalten wird.

Zwischen dem Anlaufbund 9 sowie der Anlaufscheibe 10 und den jeweils zugehörigen Axialflächen 8 der Lagerblöcke 7 ist eine Dämpfungsscheibe 12 aus einem saugfähigen, nachgiebigen Material, im Falle des beschriebenen Ausführungsbeispieles ein synthetisches Fensterleder, das unter der Handelsbezeichnung "Vileda" erhältlich ist, eingesetzt. Die Dämpfungsscheibe 12 ist, wie auch die Lagerblöcke 7 vor dem Einsetzen in Öl getränkt worden. Das Material der Dämpfungsscheibe ist so gewählt, daß die Kapillarwirkung größer ist, als die der porösen Lagerblöcke 7. Damit ist die Dämpfungsscheibe 12 stets bestrebt, Öl aus dem zugehörigen Lagerblock 7 herauszusaugen. Hier wird sich jedoch ein Gleichgewichtszustand einstellen, da die Dämpfungsscheibe 12 das Öl nicht an die Umgebung abgeben kann. Die größere Kapillarwirkung der Dämpfungsscheibe 12 verhindert auch, daß die Lagerblöcke 7 das Öl aus der Dämpfungsscheibe 12 heraussaugen, wodurch die Dämpfungsscheibe 12 ihre dämpfenden Eigenschaften verlieren würde. Der Abstand zwischen der Anlaufscheibe 10 bzw. dem Anlaufbund 9 zu der zugehörigen Axialfläche 8 des benachbarten Lagerblocks 7 ist so gewählt, daß die Dämpfungsscheibe 12 hineinpaßt, und zwar entweder mit kleinem Spiel oder unter leichter Kompression.

Im folgenden wird die Wirkungsweise der erfindungsgemäßen Wellenlagerung näher erläutert.

Wenn der Motor läuft und sich die Welle 5 dreht, baut sich in den Lagerbohrungen der Lagerblöcke 7 eine hydrodynamische Schmierströmung auf, die die Welle 5 trägt. Axialbewegungen der Welle werden durch die Dämpfungsscheiben 12 abgedämpft. Genaugenommen geschieht die Dämpfung nicht durch die Dämpfungsscheibe selbst, sondern vielmehr durch das in der Dämpfungsscheibe gespeicherte Öl. Das Material der Dämpfungsscheibe 12 wirkt wie ein Käfig, der einen zwischen den Spalt des Lagerblocks 7 und der Anlaufscheibe 10 bzw. des Anlaufbundes 9 gegebenen Öltropfen einfängt. Da auch die Kapillarwirkung des Materials der Dämpfungsscheibe stets größer ist, als die der Lagerblöcke 7, kann dieser Öltropfen nicht aus dem Spalt zwischen dem Lagerblock und dem Anlaufbund bzw. der Anlaufscheibe entweichen. Die überaus guten Dämpfungseigenschaften bleiben somit über eine hohe Anzahl von Betriebsstunden erhalten, obwohl das Material der Dämpfungsscheibe für sich genommen nicht sehr widerstandsfähig ist. Die durch Längsschwingungen der Welle 5 auftretende Geräuschentwicklung wird durch die erfindungsgemäße Wellenlagerung stark verringert.

Es sind auch andere Materialien für die Dämpfungsscheibe 12 denkbar, wichtig ist jedoch, daß die Kapillarwirkung des Materials nie geringer ist, als die Kapillarwirkung der Sinterlager, da sonst das Öl aus den Dämpfungsscheiben herausgesaugt würde.

## Patentansprüche

1. Wellenlagerung, insbesondere für einen Elektrokleinstmotor, mit mindestens einem Lagerblock (7) aus einem porösen, ölgetränkten Material, in dem eine die Welle (5) aufnehmende Lagerbohrung ausgebildet ist und der eine Axialfläche (8) aufweist, die einem auf der Welle ausgebildeten Anlaufbund (9) zugewandt ist,
**dadurch gekennzeichnet,**
daß zwischen dem Anlaufbund (9) der Welle (5) und der Axialfläche (8) des Lagerblocks (7) eine ölgetränkte Dämpfungsscheibe (12) aus einem saugfähigen Material angeordnet ist, dessen Kapillarwirkung größer ist als die des porösen Lagerblocks.

2. Wellenlagerung nach Anspruch 1, **dadurch gekennzeichnet**, daß der Abstand des Lagerblocks (7) zu dem Anlaufbund (9, 10) etwa der Dicke der ölgetränkten Dämpfungsscheibe (12) entspricht.

3. Wellenlagerung nach Anspruch 1 oder 2, **dadurch gekennzeichnet**, daß die Dämpfungsscheibe aus einem ölbeständigen Faservlies besteht.

4. Wellenlagerung nach einem der Ansprüche 1 bis 3, **dadurch gekennzeichnet**, daß die Dämpfungsscheibe (12) aus einem synthetischen Leder besteht.

## Claims

1. Shaft mounting, especially for a very small electric motor, with at least one bearing block (7) made of a porous oil-impregnated material, in which a bearing bore receiving the shaft (5) is formed and which has an axial face (8) confronting a stop collar (9) formed on the shaft, characterized in that there is arranged between the stop collar (9) of the shaft (5) and the axial face (8) of the bearing block (7) an oil-impregnated damping washer (12) made of an absorbent material, the capillary effect of which is greater than that of the porous bearing block.

2. Shaft mounting according to Claim 1, characterized in that the distance between the bearing block (7) and the stop collar (9, 10) corresponds approximately to the thickness of the oil-impregnated damping washer (12).

3. Shaft mounting according to Claim 1 or 2, characterized in that the damping washer consists of an oil-resistant fibre fleece.

4. Shaft mounting according to one of Claims 1 to 3, characterized in that the damping washer (12) consists of a synthetic leather.

## Revendications

1. Palier d'arbre, en particulier pour un micromoteur électrique, avec au moins un bloc palier (7) en matériau poreux, imbibé d'huile, dans lequel est réalisé un alésage de palier recevant l'arbre (5) et présentant une face axiale (8) tournée vers une collerette de glissement (9) réalisée sur l'arbre, caractérisé en ce qu'entre la collerette de glissement (9) de l'arbre (5) et la face axiale (8) du bloc palier (7) est disposé un disque amortisseur (12) imbibé d'huile, réalisé en un matériau à capacité d'aspiration, dont l'effet de capillarité est supérieur à celui du bloc palier poreux.

2. Palier d'arbre selon la revendication 1, caractérisé en ce que l'espacement entre le bloc palier (7) et la collerette de glissement (9,10) correspond à peu près à l'épaisseur du disque amortisseur (12) imbibé d'huile.

3. Palier d'arbre selon la revendication 1 ou 2, caractérisé en ce que le disque amortisseur est composé d'un matelas de fibres, résistant à l'huile.

4. Palier d'arbre l'une des revendications 1 à 3, caractérisé en ce que le disque amortisseur (12) est en cuir synthétique.
